# EUROPEAN PATENT APPLICATION

(11) **EP 3 909 421 A1**
(43) Date of publication of application: **17.11.2021**
(21) Application number: 20174396.0
(22) Date of filing: 13.05.2020
(51) Int. Cl.: A01K 31/00, A01K 31/18, A01K 39/04, A01K 15/02

(54) **SHINING FLOOR COVER FOR POULTRY PRODUCTION AND USE HEREOF**

(71) Applicant: Track ApS, 6870 Ølgod (DK)
(72) Inventor: NIELSEN, Carsten, 8800 Viborg (DK); ANDERSEN, Karsten Egelund, 6870 Ølgod (DK)
(74) Representative: Patrade A/S

(57) **Abstract**

The disclosure relates to shining floor cover (10) for poultry livestock breeding. The shining floor cover (10) may be configured for attracting pullets to a specific place or area of interest. The shining floor cover (10) may be adapted for floor application in the feeding area (22), drinking area (24) or both.

Further disclosed is use (100) of the shining floor cover (10) as well as shining particles (12) therefore and method of manufacturing (100) the shining floor cover (10).

## Description

### Field of disclosure

The disclosure relates to shining floor cover for poultry livestock breeding. The shining floor cover may be configured for attracting pullets to a specific place or area of interest. The shining floor cover may be adapted for floor application in the feeding area, drinking area or both.

Further disclosed is use of the shining floor cover as well as biodegradable shining particles therefore, and manufacturing of the shining floor cover.

### Background

Today, breeding livestock of poultry includes feeding of freely moving poultry. An essential part of a successful breeding includes, that the pullets must eat a substantial amount of feed within twenty-four hours after hatching for reducing any reduction in optimal development and health risks.

Furthermore, an early increase in the weight of the pullets typically also results in a more rapid growth of the pullets and hence a shorter breeding time for the pullets to reach a predetermined slaughter weight i.e. breeding time being the time from hatching to the time of reaching the predetermined slaughter weight.

Stimulating the feeding instinct of pullets is therefore of great importance in the first twenty-four hours.

US patent 2630096 discloses a poult feeder applying a green light source as a stimuli signal for stimulation of the feeding instinct immediately upon hatching and the development of healthy feeding habits during the early stages of growth.

A common and well-known appliance for attracting the chickens to the feeding area is Chick paper. Chick paper is configured for making a rustling noise when the pullets step on it. The rustling noise attracts the pullets and hence attracts the pullets to approach the feed.

Another critical point in time is, when the pullets no longer feeds off the yolk. In particular, for chickens this is around day three from hatch, where the chicken no longer feeds off the yolk. At this point, the pullets may again need additional stimuli for continuing eating and preferably to further increase in weight.

Solutions for stimulation the feeding instinct in pullets within the first twenty-four hours and again, when the pullets no longer feeds off the yolk, is of great interest for a healthy and rapid growth. Furthermore, increasing the weight of the pullet with a few percentage in the first seven days can result in the pullets reaching the appropriate slaughter weight faster and hence a shorter production time from hatching to slaughtering.

### Objective of the disclosure

One objective of the disclosure is to achieve a solution for one or more of the above-mentioned challenges.

One objective of the disclosure is to achieve floor cover for attracting poultry to a feeding area and in particular to feeding pans.

A further objective may be to stimulate the pullets feeding instinct and/or pecking.

There is also a desire to achieve a method of manufacturing such floor cover and the use hereof in the breeding of poultry livestock.

### Description of the disclosure

Disclosed herein is shining floor cover for poultry production. The shining floor cover may be configured for attracting pullets to a specific area. The shining floor cover may be adapted for floor application in feeding areas, drinking areas or both.

The shining floor cover may comprise shining particles configured with reflective characteristic of reflecting incident light in one or more directions.

In this disclosure pullets may refer to poults, broilers or similar expressions used for a young domestic chicken, turkey, pheasant, or other young fowls raised for food, rearing or breeding.

Breeding may in this disclosure be used as a general term covering rearing and keeping of livestock for food or other purposes.

The reflective characteristics of the shining particles may include sparkling, which may be defined as being reflective and shine brightly. A sparkling object may thus have a reflective surface, which reflects single or multiple incident wavelengths. A sparkling object may reflect light such that it appears as giving off tiny sparks. A sparkling object may be perceived as being clear and bright, and shining with multiple small points of light. Tinsel, mica, mother of pearl may all be perceived as being shining.

Alternatively, a sparkling object may, be perceived as to cause glitter or shine. Thus, the reflective characteristics of the shining particles may include glittering.

The shining particles may reflect light with multiple wavelengths or reflect light with wavelengths within one or more selected ranges of wavelengths.

The amount of light to be reflected may be in a range where a sufficient amount is reflected for the pullets between 10-100 % of the incoming light, 30-80% or 50-75%.

The feeding area, drinking area or both may include areas where other sources of nutrition, medical substances, drugs or other compositions beneficial in poultry production.

One effect of the shining floor cover may be to evoke the pullets' attention to the area comprising the floor cover and attract the pullets to specific areas, e.g. the drinking and/or feeding areas.

One effect of the shining particles may be to evoke the pullets' attention. The shining particles may reflect light such that the pullets' interest is evoked for approaching feeding and/or drinking area. The interest for shining objects is observed for other species of birds e.g. magpies, whom collects large shining objects.

Another effect may be to stimulate the pecking instinct of the pullets specifically by use of shining particles. This may be advantageous in the initial feeding phase of the pullets immediately after hatching for increasing or improving the pullets' pecking. The floor cover may be combined with feed arranged on the floor cover and by increasing or improving the pullets' pecking. The pullets may in the same process become exposed to the feed. This may lead to healthier and faster weight gaining pullets.

The effects may be considered as nudging the pullets to the feeding areas and the feed. This nudging effect may result in, that the pullets are taught where to find the feed; approaching the feeding area may become an entrenched habit.

Feed in the disclosure may include or be limited to nutrition, feed pellets, bugs, insects, medical substances, drugs or other compositions beneficial in poultry production.

Another effect of the shining floor cover may be that even in dim light the shining may be perceived as being equally intensive to or more intensive than in full light and hence may cause the pullets to continue eating for a longer time. A prolonged eating time may result in a faster weight gain of the pullets. An increase in weight of the pullet with a few percentage within the first seven days and especially within the first 24-hours can result in the pullets reaching the appropriate slaughter weight faster and hence achieving a shorter production time from hatching to slaughtering.

Light and pullets' perception hereof is a widely discussed subject. The perceptions of which type light, for how long and the intensity hereof is best suited for breeding of pullets varies between breeders. However, a general perception in poultry breeding is that the pullets should preferably be exposed to dark periods with a minimum duration of six hours, that bright light can be used in cases where pecking damage and cannibalism do not pose a problem and that very dim lighting may adversely affect ocular development.

Yet a further effect of the shining floor cover may arise in cases where pecking damage and cannibalism pose a problem. In this case, a dimmed lighting may be preferred. In this case, the shining may be perceived as being equally intensive to, or more intensive than in full light and hence may help to draw the pullets' attention to the eating areas, drinking areas or both and in this way cause the pullets to continue eating even in surrounding with dimmed lighting.

Furthermore, if the concern that very dim lighting may adversely affect ocular development by the pullets, the shining particles may help to reduce that risk, as the variation in intensity between the reflected light from the shining particles and the surroundings may help in the ocular development by the pullets.

This may lead to upholding the feeding activity by the pullets, even in cases where the facilities may be exposed to only dimmed lighting.

In one embodiment of the shining floor cover, the shining particles may be biodegradable.

In one embodiment of the shining floor cover, the shining particles may reflect light in the range of 315-750 nm.

In one embodiment of the shining floor cover, the shining particles may reflect light in the range of 450-510 nm, preferably in the range of 460-500, even more preferably in the range of 475-485 nm, in the range of 600-660 nm, preferably in the range of 610-650, even more preferably in the range of 625-635 nm or a combination hereof.

In one embodiment of the shining floor cover, the shining particles may reflect light in the range of 495-570 nm.

The optimal composition of light for breeding poultry may depend on the exact race being breed and the purpose of the breeding e.g. whether it is for faster weight increase, stimulation of egg production or another purpose.

The general perception in regard to chickens are, that they can see light with wavelengths in the range of 315-750 nm, and that chickens may see higher peaks at spectrums around 480 and 630 nm. Furthermore, it is by some perceived, that green light is beneficial for attracting and stimulating chickens.

One further effect of the embodiments, wherein the reflected light comprises one or more of the visible wavelengths for chickens or other pullets may be to target the shining effect to the specific race being breed. This may as previously described evoke the pullets' attention to the area comprising the shining floor cover and attract the pullets to specific areas e.g. the drinking and/or feeding areas. In addition, the targeted wavelengths may stimulate the pecking instinct of the pullets.

Another effect of the embodiments with targeted wavelengths may be to reduce the amount or size of the shining particles, if the reflected wavelengths are within a range for which the pullets has particular sensitive receptors.

In one embodiment, the shining floor cover may comprise biodegradable chick paper.

Chick paper is a special type of paper developed for poultry industry, and is common known as such. Chick paper is a paper with high rusting properties and is generally used under each drink and feed line. When pullets walk on the paper, a rusting sound emits. The sound attracts other pullets, such that finally most pullets in the livestock will gather in the feed and drink area.

The rustling of the paper in combination with the visual enhancement may result in a much clearer and direct element for training the feeding habit of the pullets without the teaching of the mother hen.

The chick paper may help to spread the pullets more evenly amongst the drinking stations and the feeding pans provided with the chick paper in the poultry facility.

The chick paper may be use in different ways for example under the drinking lines in combination with feed on the top of the paper thereby achieving that the pullets will not only find the water but also have easy access to the feed.

Another property of the chick paper may include that it is highly absorbent, such that the paper quickly soaks up bird droppings.

A further property may include that the chick paper provides the pullets with a warmer floor cover.

Yet a further property may include that the chick paper is biodegradable, such that it degrades within 3-5 days. This may be beneficial if using the pullets' droppings as fertiliser or manure. It may be further beneficial for keeping the breeding facilities clean and hygienic.

In one embodiment, the shining floor cover may have a surface density of the shining particles of 40 or less particles per cm^2 (square centimetre). In another aspect, the surface density may be 20 or less particles per cm^2.

The surface density may if beneficial be greater than the 40 particles per cm^2 (square centimetre) or as low as less than 1 particle per cm^2 (square centimetre).

The surface density may be given as a mean number for a larger area than 1 cm^2. The shining particles may thus, be arranged in varying concentrations and as randomly positioned shining particles.

One effect of the embodiment may be to ensure that the shining effect is visible even in cases where some of the shining particles are covered e.g. by bird droppings, feed or other objects.

The shape and size of the shining particles may be in particular be adapted according to the specific use e.g. the race of pullets in the production and the type of feed, for maintaining the shining effect of the floor cover when in use.

The surface density or coverage may be defined as the number of shining particles adding to the visible shining effect. Hence, in one aspect, the shining particles may be positioned inside the floor cover or below the surface, but still contributing with a shining effect and thus be included as in the particles defining the surface density or coverage.

In one aspect, the content of the shining particles may vary over an area, such that the density of the shining articles increases towards a centre point, centre line, centre area or comparable central feature. This may have an effect of guiding the pullets to the centre point, centre line, centre area or comparable central feature, which may comprise a nutrition source. Hence, in one embodiment of the shining floor cover the shining particles may be arranged to shape a geometric figure adapted to be arranged with an orientation such that the geometric figure points toward a specific area.

In one embodiment, the shining floor cover may be shaped as a geometric figure. The shining floor cover may be adapted to be arranged with an orientation such that the geometric figure points toward a specific area.

In one aspect, the patterns may be lines or triangles leading to a feeding pan, a drinking pan, a centre point, centre line, centre area or comparable central feature. This may have an effect of guiding the pullets to the feeding pan, the drinking pan, the centre point, centre line, centre area or comparable central feature, which may comprise a nutrition source.

Further disclosed herein is use of the shining floor cover in a feeding area, a drinking area or both for poultry production.

The shining floor cover may be according to any of the previously described embodiments

The effects and advantages of this use may include those already described either individually or in combination for the shining floor cover i.e.:
- evoke the pullets' attention to the area comprising the shining floor cover and attract the pullets to specific areas,
- stimulate the pecking instinct of the pullets specifically by use of shining particles,
- Utilize the shining effect even under dimmed light conditions,
- Prolong the eating time for the pullets for faster weight gain of the pullets, including different cases of lighting conditions,
- Expose the pullets to varying intensity between the reflected light from the shining particles and the surroundings.

Further disclosed herein is, a method of manufacturing the shining floor cover comprising an act of coating a surface with a mixture comprising the shining particles.

The shining floor cover may be according to any of the previously described embodiments

One effect of this method may be to obtain the floor cover using any suitable material including refitting any suitable material to be used as floor cover. A suitable material may include a foil, paper (e.g. chick paper), textile or plastic film in particular biodegradable plastic film, adapted to adhere to or lay on a floor in facilities for poultry livestock breeding. Alternatively, the surface to be coated may be the floor of the facility for poultry livestock breeding and hence, the mixture may be coating directly onto the floor.

Another effect of this method may be to obtain shining floor cover wherein the content of the shining particles varies over an area e.g. by diluting the mixture, varying the applied amount or applying multiple layers in some sub-areas, such that the density of the shining articles increases towards a centre point, centre line, centre area or comparable central feature. This may have an effect of guiding the pullets to the centre point, centre line, centre area or comparable central feature, which may comprise a nutrition source.

The effects and advantages of this method may further include those already described either individually or in combination for the shining floor cover i.e.:
- evoke the pullets' attention to the area comprising the shining floor cover and attract the pullets to specific areas,
- stimulate the pecking instinct of the pullets specifically by use of shining particles,
- Utilize the shining effect even under dimmed light conditions,
- Prolong the eating time for the pullets for faster weight gain of the pullets, including different cases of lighting conditions,
- Expose the pullets to varying intensity between the reflected light from the shining particles and the surroundings.

Further disclosed herein is a method for manufacturing the shining floor cover. The method may comprise an act of mixing the shining particles into a material adapted to be manufactured into flexible sheets or webs of shining floor cover.

Common webs may include foil, metal, paper, textile, plastic film, and wire. A web may be described as a continuous lane of material. The material usable for web fabrication are typically materials, which can be manufacture as long, thin and flexible lanes. Webs or 'endless' rolls are generally processed by moving over rollers and may be stored and transported as rolls also known as coils, packages and doffs. The use of webs usually ends out in using a part of the web as a sheet.

Sheets may be used in combination with tray type implementations.

The shining floor cover may be according to any of the previously described embodiments

One effect of this method may be to process the floor cover effectively using common known manufacturing processes for web. Webs can be made at high speeds and do not have the start-stop issues of discrete sheet processing.

A further effect may be to utilise common used storing and transporting principles for web materials.

Yet a further effect may be to incorporate the shining particles into common known chick paper utilising existing manufacturing facilities therefore to manufacture the shining floor cover.

The effects and advantages of this method may further include those already described either individually or in combination for the shining floor cover i.e.:
- evoke the pullets' attention to the area comprising the shining floor cover and attract the pullets to specific areas,
- stimulate the pecking instinct of the pullets specifically by use of shining particles,
- Utilize the shining effect even under dimmed light conditions,
- Prolong the eating time for the pullets for faster weight gain of the pullets, including different cases of lighting conditions,
- Expose the pullets to varying intensity between the reflected light from the shining particles and the surroundings.

Further disclosed herein is shining particles for shining floor cover for poultry production. The shining particles may be configured with reflective characteristic of reflecting incident light in one or more directions.

The shining floor cover may be according to any of the previously described embodiments

The effects and advantages of this method may further include those already described either individually or in combination for the shining floor cover i.e.:
- evoke the pullets' attention to the area comprising the shining floor cover and attract the pullets to specific areas,
- stimulate the pecking instinct of the pullets specifically by use of shining particles,
- Utilize the shining effect even under dimmed light conditions,
- Prolong the eating time for the pullets for faster weight gain of the pullets, including different cases of lighting conditions,
- Expose the pullets to varying intensity between the reflected light from the shining particles and the surroundings.

### Brief description of the drawings

Various examples are described hereinafter with reference to the figures. Like reference numerals refer to like elements throughout. Like elements will thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.
Figure 1 illustrates three embodiments of the shining floor cover having different geometric shapes.
Figure 2 illustrates three embodiments of the shining floor cover having different densities of shining particles.
Figure 3 illustrates two embodiments of shining floor cover manufactured as a web or sheets.
Figure 4 illustrates one embodiment of the use of the shining floor cover.
Figure 5 illustrates two embodiments of manufacturing methods of the shining floor cover.

**Detailed description of the disclosure**

| **No** | **Item** |
|---|---|
| 10 | shining floor cover |
| 12 | shining particles |
| 14 | chick paper |
| 16 | geometric figure |
| 20 | specific area |
| 22 | feeding area |
| 24 | drinking area |
| 26 | surface |
| 30 | mixture |
| 32 | material |
| 36 | sheet |
| 38 | web |
| 100 | use |
| 200 | method |
| 202 | coating |
| 204 | mixing |

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

The drawings are not made to scale. The thicknesses of layers and areas may be illustrated in an enlarged manner for clarity and ease of description thereof. When an item is referred to as being "arranged on" another item, it may be arranged directly on the other item or intervening items may be present there between. Conversely, when a layer, area, element, or plate is referred to as being "directly on" another item, there are no intervening items there between. Further, when an item is referred to as being "below" another item, it may be directly below the other layer, or intervening items may be present there between. Conversely, when an item is referred to as being "directly below" another item, there are no intervening items there between. The previous also applies to similar spatial relative terms, this also includes 'connect to' and 'directly connected to'.

The spatially relative terms "lower" or "bottom" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or in operation

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

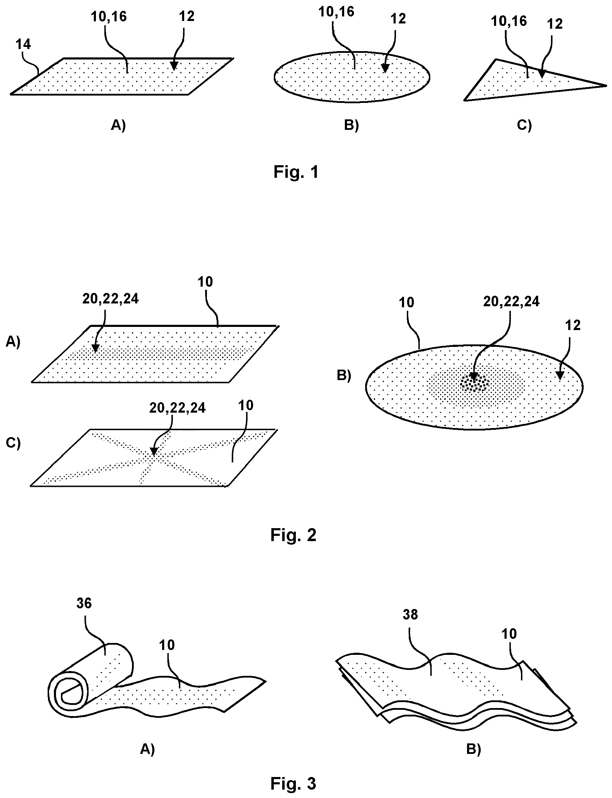

Figure 1 illustrates three embodiments of the shining floor cover 10 each having a particular geometric figure 16 and comprising shining particles 12 with a given surface density. Figure 1A illustrates the shining floor cover 10 with a rectangular shape. Figure 1B illustrates the shining floor cover 10 with a circular shape. Figure 1C illustrates the shining floor cover 10 with a triangular shape. Other geometric figures may be used for the shining floor cover 10, if suitable for the facilities.

The three embodiments of the shining floor covers 10 are all illustrated with a more or less uniform surface density and with a density being the same for the three embodiments. This is only for illustrative purposes and hence, the surface density could vary between the three embodiments and from one shining floor cover 10 with a rectangular shape to another shining floor cover 10 with also a rectangular shape; an likewise for other geometric shaped floor covers 10.

The shining floor covers 10 may comprise chick paper 14 with shining particles 12, as illustrated in figure 1A

Figure 2 illustrates three embodiments of the shining floor cover 10 having different surface densities of shining particles 12. The surface density of each floor cover 10 may vary within that floor cover 10.

Figure 2A illustrates a rectangular floor cover 10 with a surface density of shining particles 12, which increases towards a centre line. This may have an effect of guiding the pullets to a specific area 20, here the centre line. In a further embodiment not illustrated here, a number of feeding pans, drinking pans or other nutrition sources may be arranged e.g. above that line i.e. the centre line may be a feeding area 22 or a drinking area 24.

Figure 2B illustrates a circular floor cover 10 with a surface density of shining particles 12, which increases towards a centre area or point. This may have an effect of guiding the pullets to a specific area 20, here the centre area. In a further embodiment not illustrated here, one or more feeding pans, drinking pans or other nutrition sources may be arranged e.g. above that area.

Figure 2C illustrates a rectangular floor cover 10 with a surface density of shining particles 12, which increases towards a centre area or point. This may have an effect of guiding the pullets to a specific area 20, here the centre area. In a further embodiment not illustrated here, one or more feeding pans, drinking pans or other nutrition sources may be arranged e.g. above that area.

Figure 3 illustrates two embodiments of shining floor cover 10 manufactured as a web 36 or sheets 38.

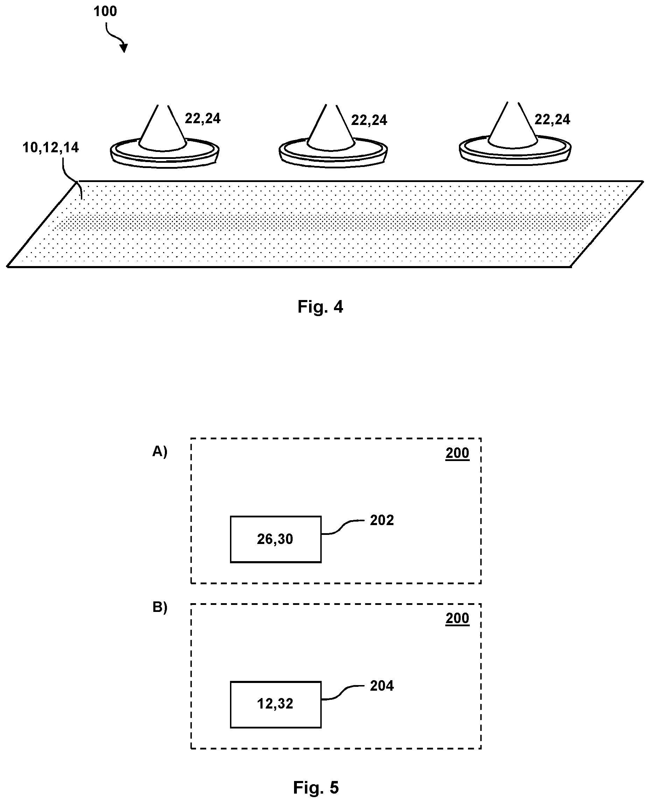

Figure 4 illustrates one embodiment of the use 100 of the shining floor cover 10. In the illustrated embodiment, the floor cover 10 has a graded surface density of shining particles 12, which density increases from one edge of the floor cover 10 towards a centre line of the floor cover 10 and decreases again towards the opposite edge of the floor cover 10. The illustrated floor cover 10 may comprise chick paper 14, which may be characteristic in that it makes a rustling noise when the pullets step on it, is highly absorbent e.g. of bird droppings amongst other parameters previously described herein. The illustrated floor cover 10 in this embodiment is comparable to the embodiment illustrated in figure 2A, where the surface density of shining particles 12 increases towards a centre line. This may have an effect of guiding the pullets to the centre line where a number of feeding pans 22, drinking pans 24 or other nutrition sources may be arranged e.g. above the centre line as illustrated here.

Other floor covers 10 could have be illustrated for this embodiment of a use including those illustrated in any of figures 1A-C, 2A-C, 3A, 3B amongst others. Depending on the form of the surface density, one or more feeding pans 22, drinking pans 24 or other nutrition sources may be arranged accordingly.

Figure 5 illustrates two embodiments of methods 100 of manufacturing the shining floor cover 10.

Figure 5A illustrates a method comprising an act of coating 202 a surface 26 with a mixture 30 comprising the shining particles. The coating may be suitable for being applied directly onto the surface of a floor, a surface of a chick paper, or another suitable material. In case the mixture is applied to a material, which may be subject for the pullets to ruin when pecking and possibly to eat due to the pecking, the material providing the surface may preferably be .

Figure 5A illustrates a method comprising an act of mixing 204 the shining particles 12 into a material 32 adapted to be manufactured into flexible sheets or webs of shining floor cover. In case the material of the web or sheets may be subject for the pullets to ruin is due to pecking and possibly to eat due to the pecking, the material may preferably be biodegradable.

## Claims

1. Shining floor cover (10) for poultry production configured for attracting pullets to a specific area (20) and adapted for floor application in feeding areas (22) and/or drinking areas (24), wherein the shining floor cover (10) comprises shining particles (12) configured with reflective characteristic of reflecting incident light in one or more directions.

2. Shining floor cover (10) according to claim 1 wherein the shining particles (12) are biodegradable.

3. The shining floor cover (10) according to any one of the preceding claims, wherein the shining particles (12) reflects light in the range of 315-750 nm, preferably in the range of 495-570 nm.

4. The shining floor cover (10) according to any one of the preceding claims, wherein the shining particles (12) reflects light in the range of 450-510 nm, preferably in the range of 460-500, even more preferably in the range of 475-485, in the range of 600-660 nm, preferably in the range of 610-650, even more preferably in the range of 625-635 nm or a combination hereof.

5. The shining floor cover (10) according to any one of the preceding claims, comprising biodegradable chick paper (14).

6. The shining floor cover (10) according to any one of the preceding claims, with a surface density of the shining particles (12) of 40 or less particles per cm^2 (square centimetre), preferably 20 or less particles per cm^2.

7. The shining floor cover (10) according to any one of the preceding claims, wherein the shining particles (12) are arranged to shaped a geometric figure (16) adapted to be arranged with an orientation such that the geometric figure (16) points toward a specific area (20).

8. The shining floor cover (10) according to any one of the preceding claims, shaped as a geometric figure (16) adapted to be arranged with an orientation such that the geometric figure (16) points toward a specific area (20).

9. Use (100) of the shining floor cover (10) according to any one of claims 1-8 in a feeding area (22) and/or drinking area (24) for poultry production.

10. Method (200) for manufacturing the shining floor cover (10) according to any one of claims 1-8 comprising an act of coating (202) a surface (26) with a mixture (30) comprising the shining particles (12).

11. Method (200) for manufacturing the shining floor cover (10) according to any one of claims 1-8 comprising an act of mixing (204) the shining particles (12) into a material (32) adapted to be manufactured into flexible sheets (36) or webs (38) of shining floor cover (10).

12. Shining particles (12) for use in a floor cover (10) according to any one of claims 1-8, wherein the shining particles (12) are configured with reflective characteristic of reflecting incident light in one
